**Europäisches Patentamt**

**European Patent Office**

**Office européen des brevets**

(11) Veröffentlichungsnummer: **0 407 861 A2**

# EUROPÄISCHE PATENTANMELDUNG

(21) Anmeldenummer: **90112658.1**

(22) Anmeldetag: **03.07.90**

(51) Int. Cl.5: **G08B 29/00**, G03B 19/00

(30) Priorität: **14.07.89 DE 3923355**

(43) Veröffentlichungstag der Anmeldung:
**16.01.91 Patentblatt 91/03**

(84) Benannte Vertragsstaaten:
**ES FR GB IT**

(71) Anmelder: **TELEFUNKEN electronic GmbH**
**Theresienstrasse 2**
**D-7100 Heilbronn(DE)**

(72) Erfinder: **Wagner, Norbert**
**Blücherstrasse 10**
**D-8070 Ingolstadt(DE)**

(74) Vertreter: **Maute, Hans-Jürgen, Dipl.-Ing.**
**TELEFUNKEN electronic GmbH**
**Theresienstrasse 2**
**D-7100 Heilbronn(DE)**

(54) **Verfahren und Vorrichtung zur Diebstahlsicherung von Film-, Foto- und Videokameras.**

(57) Die Erfindung betrifft ein Verfahren und eine Vorrichtung zur Diebstahlsicherung von Film-, Foto- und Videokameras. Erfindungsgemäß enthält ein Speicher ein abgespeichertes Diebstahlschutz-Codewort, wobei nach jedem Filmwechsel ein Codewort eingegeben wird und die ordnungsgemäße Funktion der Kamera verhindert wird, falls das eingspeicherte Diebstahlschutz-Codewort von dem eingegebenen Codewort abweicht. Ferner enthält die Vorrichtung zur Durchführung des Verfahrens eine Speichercodewähleinrichtung, eine Codeeingabeeinrichtung, eine Vergleichs- und Steuerschaltung sowie eine Sperrschaltung, die auf ein Signal von der Vergleichsund Steuerschaltung hin die ordnungsgemäße Funktion der Kamera aufhebt.

FIG.2

EP 0 407 861 A2

# VERFAHREN UND VORRICHTUNG ZUR DIEBSTAHLSICHERUNG VON FILM-, FOTO- UND VIDEOKAMERAS

Die Erfindung betrifft ein Verfahren und eine Vorrichtung zur Diebstahlsicherung von Film-, Foto- und Videokameras.

Es ist bisher nicht bekannt, Film-, Foto- und Videokameras gegen Diebstahl zu schützen.

Daher stellt sich für die vorliegende Erfindung die Aufgabe, ein Verfahren und eine Vorrichtung zur Diebstahlsicherung von Film-, Foto- und Videokameras verfügbar zu machen.

Diese Aufgabe wird durch die kennzeichnenden Merkmale des Anspruches 1 und des Anspruches 5 gelöst.

Die Diebstahlsicherung wird bei der Erfindung mittels eines Verfahrens erreicht, bei dem anfänglich ein bestimmtes Diebstahlschutz-Codewort gespeichert werden kann. Nach jedem Filmwechsel erfolgt eine Codeabfrage, so daß nach erfolgter Eingabe eines Codewortes überprüfbar ist, ob das eingegebene Codewort mit dem gespeicherten Diebstahlschutz-Codewort übereinstimmt.

Weichen die beiden Codeworte voneinander ab, wird die Funktion der Kamera gesperrt, das heißt die ordnungsgemäße Funktion der Kamera wird verhindert.

Zunächst wird der Diebstahl einer mit der erfindungsgemäßen Diebstahlsicherung ausgerüsteten Kamera nicht verhindert, jedoch ist die Kamera für den Dieb wertlos, da er den Code nicht kennt. Wird es jedoch allgemein bekannt, daß Kameras mit einer solchen Diebstahlsicherung ausgerüstet sind, wird ein Dieb von einem beabsichtigten Diebstahl absehen, wodurch die Kamera somit vor einem Diebstahl geschützt ist.

Bei einer besonders bevorzugten Weiterbildung der Erfindung können mehrere falsche Codewörter eingegeben werden, bevor die ordnungsgemäße Funktion der Kamera verhindert wird.

In einer weiteren Ausgestaltung wird die ordnungsgemäße Funktion durch ein Abschalten der Elektronik der Kamera verhindert.

Schließlich kann die ordnungsgemäße Funktion gemäß einer weiteren Ausgestaltung der Erfindung durch eine mechanische Sperre der Objektiveinstellung der Kamera verhindert werden.

Im folgenden wird die Erfindung am Beispiel einer Ausführungsform anhand von Zeichnungen beschrieben, hierbei zeigt

Fig. 1 ein Blockschaltbild einer Ausführungsform der erfindungsgemäßen Diebstahlschutz-Vorrichtung, und

Fig. 2 ein Flußdiagramm zur Darstellung der Arbeitsweise von der in Fig. 1 dargestellten Diebstahlschutzvorrichtung.

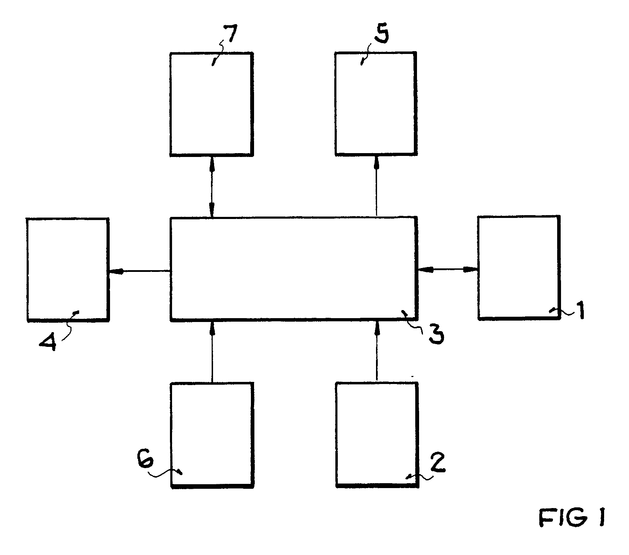

In dem Blockschaltbild der Figur 1 ist mit dem Bezugszeichen 7 eine Kamera bezeichnet, die von einer Vergleichs- und Steuerschaltung 3 gesteuert wird. Ferner steuert die Vergleichs- und Steuerschaltung 3 eine Anzeigevorrichtung 5 sowie eine Funktionssperrschaltung 4. Weiterhin ist eine Speichercodewähleinrichtung 1 zur Übertragung des gespeicherten Diebstahlschutzcodewortes mit der Vergleichs- und Steuerschaltung 3 verbunden. Hierzu enthält die Speichercodewähleinrichtung 1 einen Speicher, beispielsweise einen elektrisch löschbaren Speicher (EEPROM). Schließlich ist noch ein Sensor 6 und eine Codeeingabeeinrichtung 2 mit der Vergleichsund Steuerschaltung 3 verbunden. Der Sensor 6 dient zur Feststellung eines Filmwechsels, während über die Codeeingabeeinrichtung ein Codewort einzugeben ist.

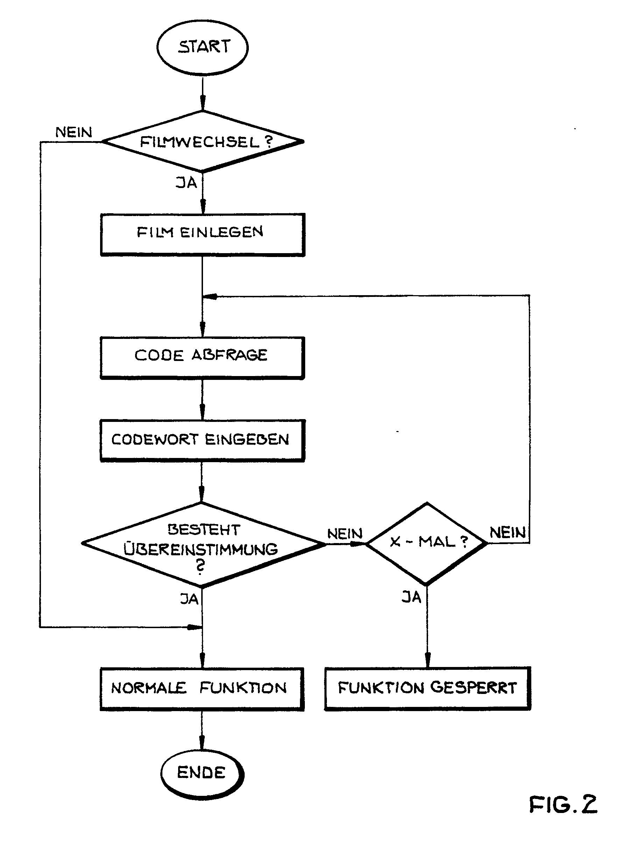

Die zum Zweck des Diebstahlschutzes verwendete Funktionssperrung der Kamera wird nun anhand des in Figur 2 gezeigten Flußdiagrammes beschrieben. Nach der Inbetriebnahme der Kamera erfolgt eine Überprüfung, ob ein Filmwechsel stattgefunden hat, oder ob nach Kauf der Kamera der erste Film eingelegt wurde. Ist nun ein Film eingelegt worden, erfolgt eine Codeabfrage, die über die Anzeige 5 angefordert wird. Anschließend ist über die Codeeingabeeinrichtung 2 ein Codewort einzugeben, das in der Vergleichs- und Steuerschaltung 3 mit dem Codewort, das in der Speichercodewähleinrichtung gespeichert ist, verglichen wird. Besteht eine Übereinstimmung zwischen diesen beiden Codewörtern kann die Kamera ganz normal betrieben werden. Unterscheidet sich jedoch das eingegebene Codewort von dem eingespeicherten Diebstahlschutz-Codewort, erfolgt eine nochmalige Codeabfrage.

Dieser Vorgang kann sich mehrere Male wiederholen, beispielsweise x-Mal; besteht dann immer noch keine Übereinstimmung, so erfolgt eine Funktionssperrung, die über die Funktionssperrschaltung ausgelöst wird. Dies kann dadurch erfolgen, daß die Elektronik der Kamera blockiert wird oder eine mechanische Sperre der Objektiveinstellung erfolgt.

Da im allgemeinen der Diebstahlschutzcode vom Hersteller vor Auslieferung der Kamera eingestellt wird, kann die Funktionssperrung der Kamera nur vom Fachhändler unter Vorlage eines Kaufbeleges wieder rückgängig gemacht werden.

Es gibt nun zwei Arten des Betriebes des erfindungsgemäßen Diebstahlsicherungssystems.

Einerseits wird der Diebstahlschutzcode wie oben schon erwähnt, vom Hersteller vor Auslieferung des Gerätes eingestellt, wobei der Benutzer diesen Code nicht ändern kann. In diesem Fall wird beispielsweise das Codewort in einem verschlossenen Umschlag ausgehändigt.

Andererseits ist es auch möglich, daß zur ersten Inbetriebnahme der Hersteller in der Speichercodwähleinrichtung für alle ausgelieferten Kameras ein gültiges Codewort einspeichert, welches für alle Geräte gleich lautet und daher in den allgemeinen Kundenunterlagen genannt ist. Der Kunde kann jedoch ein eigenes Codewort eingeben, indem er nach erfolgreicher Eingabe des bisherigen Codewortes ein neues Codewort eingibt, welches in der Speichercodewähleinrichtung abgelegt wird.

Für den Fall, daß der Benutzer das von ihm gewählte Codewort vergessen hat, ist in der Speichercodewähleinrichtung eine Verschlüsselungstabelle angelegt, mit deren Hilfe bei der Eingabe eines falschen Codewortes auf der Anzeigevorrichtung 5 ein Schlüsselwort erscheint. Die Zuordnung des Schlüsselwortes zum richtigen Codewort ist nur dem Hersteller bekannt, so daß der Benutzer unter Vorlage seines Kaufbeleges das von ihm gewählte Codewort erfragen kann.

Zur Eingabe der Codewörter ist es kaum wirtschaftlich, für das erfindungsgemäße Verfahren zur Diebstahlsicherung separate Bedien- bzw. Anzeigeelemente vorzusehen. Daher wird die in den Kameras ohnehin vorhandene alphanumerische Anzeige als Anzeigevorrichtung 5 benützt. Diese sowie beispielsweise die Bedientasten werden von der Vergleichs- und Steuerschaltung 3 zur Eingabe des Codewortes umgeschaltet, wenn gemäß dem oben beschriebenen Verfahren die Eingabe eines Codewortes erforderlich ist.

Da sich die Sicherheit gegen ein Herausfinden des Codes durch Probieren einerseits mit der Anzahl der Stellen und andererseits mit der Wahl von alphanumerischen Zeichen anstelle von numerischen Zeichen erhöht, können auch alphanumerische Zeichen als Codewort verwendet werden. Die Eingabe eines solchen Codewortes mit der Anzeigevorrichtung 5 und der Codeeingabeeinrichtung 2 kann dadurch erfolgen, daß nach Betätigen einer Taste der Codeeingabeeinrichtung die erste Stelle der Anzeigevorrichtung 5 nacheinander die Ziffern 0 bis 9 und die Buchstaben A bis Z, also insgesamt 36 Zeichen zeigt. Bei Erscheinen des gewünschten Zeichens ist die Taste loszulassen, so daß das Zeichen, das gerade angezeigt wird, in den Speicher der Speichercodewähleinrichtung 1 eingegeben wird. Mit den weiteren Zeichen wird in ähnlicher Weise verfahren.

Um festzustellen ob ein Filmwechsel, also ob ein Film aus der Kamera entnommen wurde, ist ein Sensor 6 für den Filmwechsel in der Kamera vorgesehen. Für den Sensor 6 gibt es verschiedene Realisierungsmöglichkeiten, beispielsweise kann er das Öffnen der Kamera zur Herausnahme des Filmes registrieren, oder über ein Fotodiode beim Herausnehmen des Filmes das einfallende Licht detektieren, oder auch Kombinationen hiervon.

## Ansprüche

1) Verfahren zur Diebstahlsicherung von Film-, Foto-und Videokameras, dadurch gekennzeichnet, daß ein Speicher ein abgespeichertes Diebstahlschutz-Codewort enthält, daß nach jedem Filmwechsel ein Codewort eingegeben wird und daß die ordnungsgemäße Funktion der Kamera verhindert wird, falls das eingespeicherte Diebstahlschutz-Codewort von dem eingegebenen Codewort abweicht.

2) Verfahren nach Anspruch 1, dadurch gekennzeichnet, daß mehrere Eingaben von falschen Codewörtern erfolgen können, bevor die ordnungsgemäße Funktion der Kamera verhindert wird.

3) Verfahren nach Anspruch 1 oder 2, dadurch gekennzeichnet, daß die ordnungsgemäße Funktion durch ein Abschalten der Elektronik der Kamera verhindert wird.

4) Verfahren nach Anspruch 1 oder 2, dadurch gekennzeichnet, daß durch eine mechanische Sperre der Objektiveinstellung der Kamera die ordnungsgemäße Funktion verhindert wird.

5) Vorrichtung zur Durchführung des Verfahrens nach Anspruch 1, gekennzeichnet durch eine Speichercodewähleinrichtung (1) zum anfänglichen Speichern eines bestimmten Diebstahlschutz-Codewortes, eine Codeeingabeeinrichtung (2) zur Eingabe eines Codewortes, eine Vergleichs- und Steuerschaltung (3) zum Vergleich des über die Codeeingabeeinrichtung eingegebenen Codewortes mit dem aus der Speichercodewähleinrichtung ausgelesenen Diebstahlschutz-Codewort, und eine Sperrschaltung (4), die auf ein Signal von der Vergleich- und Steuerschaltung (3) hin die ordnungsgemäße Funktion der Kamera aufhebt.

FIG 1

FIG.2